# EUROPEAN PATENT SPECIFICATION

(11) **EP 0 907 911 B1**
(45) Date of publication and mention of the grant of the patent: **16.08.2001**
(21) Application number: 97928128.4
(22) Date of filing: 24.06.1997
(51) Int. Cl.: G05B 15/00

(54) **A METHOD AND A SYSTEM FOR DETECTING AND INDICATING THE STATES OF A PROCESS SYSTEM**
VERFAHREN UND SYSTEM ZUR DETEKTION UND ANZEIGE DER BETRIEBSZUSTÄNDE EINES VERFAHRENSSYSTEMS
PROCEDE ET DISPOSITIF SERVANT A DETECTER ET A INDIQUER LES ETATS D'UN SYSTEME FONCTIONNEL

(30) Priority: 24.06.1996 DK 69796
(43) Date of publication of application: 14.04.1999
(73) Proprietor: TELLABS DENMARK A/S, 2750 Ballerup (DK)
(72) Inventor: DEICHMANN, Peter, DK-2750 Ballerup (DK)
(74) Representative: Boesen, Johnny Peder
(86) International application number: DK9700277
(87) International publication number: WO9750023

(56) References cited:
- WO-A-92/05485
- US-A- 5 483 631
- US-A- 5 511 191
- PATENT ABSTRACTS OF JAPAN, Vol. 97, No. 5; & JP,A,09 023 229 (HITACHI INF SYST LTD), 21 January 1997.
- ADVANCES IN INSTRUMENTATION: PROCEEDINGS OF THE ISA/88 INTERNATIONAL CONFERENCE AND EXHIBIT, Vol. 4, 1988, (USA), MOORE et al., "The G2 Real-Time Expert System", pp. 1625-33.

## Description

The invention concerns a method of detecting and indicating the states of a system, wherein said states are indicated by means of multimedia objects on a representation unit, and a corresponding system.

Monitoring systems capable of showing or otherwise indicating the states of a system by means of multimedia objects, such as static image on a screen, video sequences or sound signals, are well-known. They are used e.g. for monitoring industrial plants or teletransmission networks.

Today, such control and monitoring systems will frequently be programmed in a computer; but there are also systems which are designed as electronic controls. For each of the states of the monitored system, the monitoring system may be designed or programmed e.g. to show a specific screen image or emit a sound signal to indicate that the state concerned has occurred. In the previously known monitoring systems, this is an integral part of the actual control and monitoring program, which may be expedient of course, since all programming can then take place at the same time.

Such a system is known from e.g. US 5 483 631. The system disclosed here has a display unit separated from the control or management system itself. The display unit has assigned a display identifier to each of the objects that can be shown. The management system has a table showing correspondences between each display identifier and the events in the controlled system. When an event occurs it is the management system that performs calculations of what to show and subsequently transmits a display identifier to the display unit which only shows the object corresponding to the identifier. No real data processing is thus carried out in the display unit.

WO 92/05485 describes a network management system in which the user in a number of personality modules can specify customized displays. This system does not use a table showing correspondences between the states of the network and the display. Instead a virtual network machine is used and changes therein are notified to a user interface.

However, it has the drawback that it is difficult later to change the manner in which a given state is indicated, since this requires intervention in the actual control and monitoring program. Frequently, a user of the system needs or wishes to make such changes; but since the user normally is not allowed to change the actual programs, this can be done only with the cooperation of the supplier of the equipment, which, particularly in case of minor changes, makes it difficult to make such changes.

Accordingly, an object of the invention is to provide a method of the type mentioned in the opening paragraph, enabling users of the control and monitoring system e.g. to make changes, in a simple manner, in the way in which a given state is indicated.

This is achieved according to the invention as defined by independent claims 1 and 7, in that the list in which the information on which objects are assigned to each state is stored is separate from the control and monitoring system.

When the relation between the states and the multimedia objects is indicated in a separate list or a table instead of being part of the actual control or monitoring system, it will be much easier to change these relations, it being just necessary to change a position in the list, without the actual program having to be changed. A customer can thus prepare such changes himself without being in touch with the control system itself.

When, as stated in claim 2, when the control and monitoring system in the operation of the process system detects one of said states, information hereof is transmitted to an object control system, which from the list fetches the indication of the multimedia object or objects assigned to the state, which are then represented on the representation unit, it is further achieved that the handling of the process system and the handling of the representation functions can be kept totally separated in two separate systems, which further reduces the risk of unintended interference in the control and monitoring system itself.

When, as stated in claim 3, several multimedia objects are assigned to at least some of the possible states of the system, and these objects are divided into a plurality of groups or layers, and occurrence of one of these states is then indicated by representing the object or objects from one of the groups, it is ensured that a given state may be indicated in one of a plurality of different ways. If, as stated in claim 4, the objects from the other group or groups can then be represented, as desired, it is additionally ensured that an operator can switch between the various indications of a given state. For example, it is conceivable that an error in an electronic circuit is first shown by an image which shows which module is defective. The operator can then switch to another image, where it can be seen on a diagram of the module concerned which component has caused the error.

As stated in claim 5, the multimedia objects may expediently be generated by means of special tools adapted for the purpose. These may e.g. be ordinary, well-known drawing programs to generate images for display on a computer screen.

It may be made even more easy for a user to change the application of the multimedia objects, if, as stated in claim 6, said list is generated as a plurality of commands in an animation language. It may e.g. be a so-called script language, which exclusively consists of readily understandable commands, and which can therefore be used without special knowledge.

As mentioned, the invention also concerns a system for detecting and indicating the states of a process system by means of multimedia objects on a representation unit. When the list of which objects are assigned to the states of the process system is separated from the control and monitoring system, then the advantages described above are achieved.

Claims 8-12 define expedient embodiments of the control and monitoring system, which correspond to the method claims 2-6.

The representing means of the control and monitoring system may moreover be adapted to manipulate the multimedia objects independently of their nature, as stated in claim 13. A graphical image may e.g. be enlarged to show a segment of the image, or the strength of a sound signal may be adjusted.

Finally, as stated in claim 14, the object control system may comprise means for activating signals which may affect the process system and/or the control and monitoring system. This e.g. allows navigation in the process system to remedy an error, or dialogs may be embedded in the control and monitoring system which make it easier to trace an error.

The invention will now be explained more fully below with reference to the drawing, in which
fig. 1 shows a control and monitoring system in which the invention is implemented,
fig. 2 shows in greater detail how a list is generated according to the invention, and
figs. 3, 4 and 5 show different layers of multimedia objects between which an operator may switch.

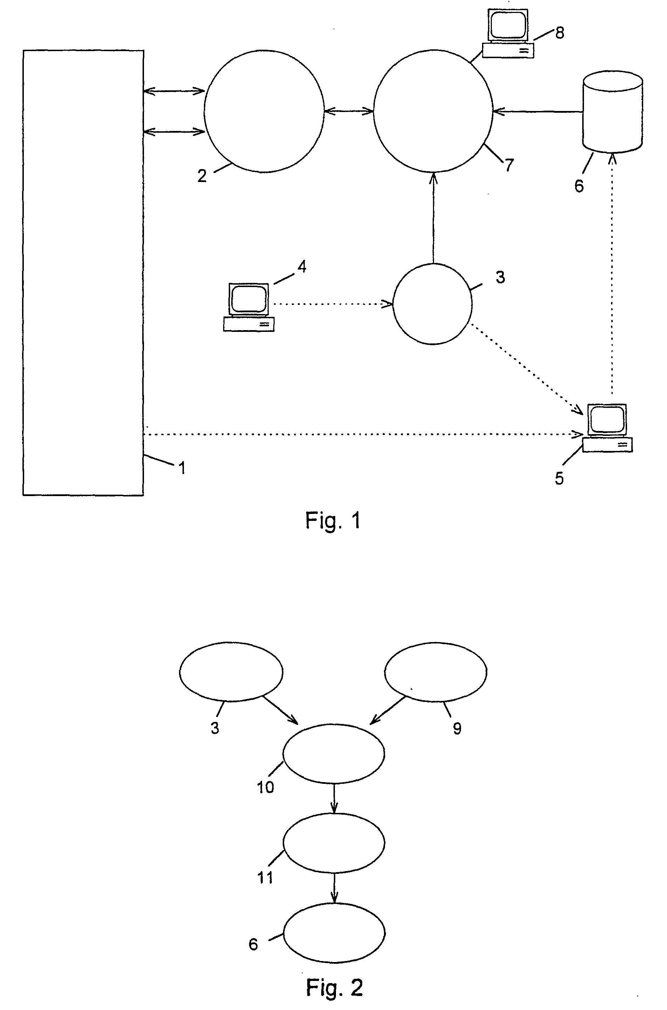

Fig. 1 shows an example of how a control and monitoring system of the invention may be designed. The process system 1 is the system to be monitored, and it may e.g. be an industrial plant or a teletransmission network. The control and monitoring system 2 is likewise well-known, and it will usually be programmed to respond in a specific manner when a specific state or error occurs. As will seen by the shown arrows, the control and monitoring system 2 is connected with the process system 1, and the connection is bidirectional, since both control and monitoring may take place.

The system of the invention indicates the states of the process system by means of a plurality of multimedia objects 3, which may e.g. be static images on a screen, video sequences or sound signals. The individual multimedia objects may be generated by means of ordinary tools 4 adapted for the purpose, such as well-known drawing programs or the like. In a special, dedicated tool 5, each of the process system states is linked to one or more of the multimedia objects 3, and these relations are stored in a list 6. The tool 5 will be described in more detail later. The activities described here take place before the control and monitoring system is put into operation, and they are shown in dashed line in fig. 1.

When the control and monitoring system is in operation, the process system states are indicated by the object control system 7. When this detects via the control and monitoring system 2 that a specific state has occurred, it consults the list 6 to see which multimedia object or objects belong to this state, and this or these is/are then fetched from the multimedia objects 3 and is/are represented on the representation unit 8, which may e.g. be an ordinary computer screen.

If it is desired at a later time to change the multimedia objects which belong to a specific state, this may be done by means of the tool 5, which then places the new relation in the list 6. An alternative is direct writing in the list 6. Where completely new objects are needed, these may be generated by means of the tools 4.

It is shown in greater detail in fig. 2 how the dedicated tool 5, which generates the list 6, functions. In an animation editor 10, the process system states 9 are linked to the multimedia objects 3, and then the actual list 6, which is also called an animation script, is generated by a script compiler 11 as a plurality of readily understandable commands in a special animation language.

For example, the animation language may have commands such as STATE LIST S01("S01"), STATE LIST S02("S02"), etc., which define the various objects. The relation between the process system states and the multimedia objects may then be indicated by commands such as PICTURE ("ARROW.WMF",83,640,113,714) USES S02 or ALARMRECORD 12 USES S05.

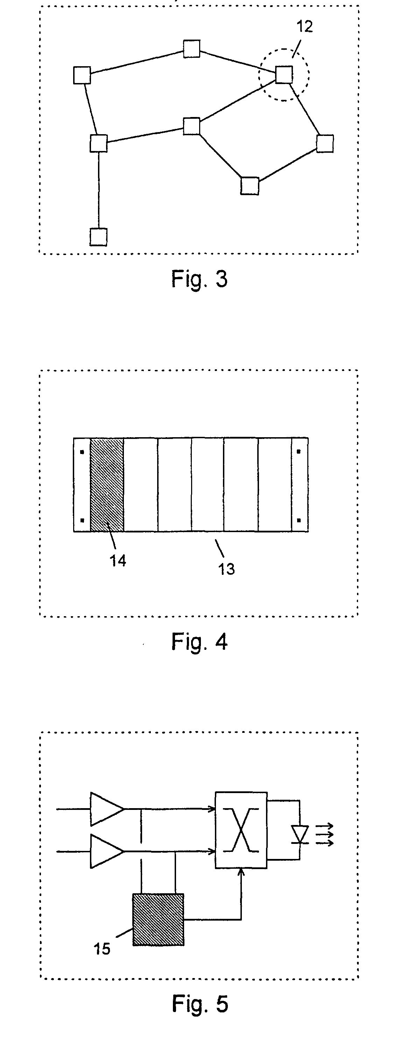

When several multimedia objects are linked to a given state, these may be divided into groups or layers so that just one layer is shown at a time. An operator can then decide by himself which layer he wants to see. An example of this is shown in figs. 3, 4 and 5.

Fig. 3 is an example of a screen image which may be displayed on a screen in case of an error in a teletransmission network and corresponds to a first layer of multimedia objects for precisely this error state. The screen image shows the geographical extent of the network, and it is shown by a dashed circle that there is an error on the network element 12. This gives the operator an overview of the consequences of the error for the function of the network.

By clicking or double-clicking on the network element concerned e.g. with a mouse, the operator can then switch to the next layer, which may e.g. be as shown in fig. 4. This shows the physical structure of the network element concerned, which may consist of a plurality of modules arranged in a rack 13, and the defective module 14 is accentuated here. The module is shown hatched in the figure; but, typically, colours will be used, and an error may e.g. be indicated by a red colour.

By clicking on the defective module again, the operator can then switch to the third layer, which is shown in fig. 5. This shows a block diagram of the function of the module, and it will be seen that the error is in the block 15.

In addition to switching between the various layers, the operator may moreover manipulate with the individual screen images. For example, an image may be enlarged so that just a segment of the original image is shown. Correspondingly, if sound signals are included in the multimedia objects concerned, the sound strength may be adjusted.

In fig. 1 the arrow between the control and monitoring system 2 and the object control system 7 is shown to be bidirectional, as the object control system 7 may also be adapted to affect the control and monitoring system 2. For example, dialogs may be embedded in the control and monitoring system, which make it easier to trace an error.

Although a preferred embodiment of the present invention has been described and shown, the invention is not restricted to this, but may also be embodied in other ways within the scope of the subject-matter defined in the accompanying claims. For example, it is possible to use other types of multimedia objects than those mentioned here.

## Claims

1. A method of detecting and indicating the states of a process system (1), wherein each of the possible states (9) of the process system is detected by a control and monitoring system (2) and assigned to one or more multimedia objects (3), e.g. static images on a screen, video sequences or sound signals, and information on which states are assigned to which multimedia objects is stored in a list (6), and wherein said states are then indicated on a representation unit (8) by means of said multimedia objects (3), **characterized** in that the list (6) in which the information on which states are assigned to which multimedia objects is stored separate from the control and monitoring system (2).

2. A method according to claim 1, **characterized** in that, when the control and monitoring system (2) in the operation of the process system detects one of said states, information hereof is transmitted to an object control system (7), which from the list (6) fetches the indication of the multimedia object or objects assigned to the state, which are then represented on the representation unit (8).

3. A method according to claim 1 or 2, **characterized** in that several multimedia objects are assigned to at least some of the possible states of the system, said multimedia objects being divided into a plurality of groups, and that occurrence of one of these states is indicated by representing the object or objects from one of said groups.

4. A method according to claim 3, **characterized** in that the objects from the other group or groups may then be represented, as desired.

5. A method according to claims 1-4, **characterized** in that the multimedia objects (3) are generated in advance by means of special tools (4) adapted for the purpose.

6. A method according to claims 1-5, **characterized** in that said list (6) is generated by a script compiler (11) as a plurality of commands in a special animation language.

7. A system for detecting and indicating the states of a process system (1) and comprising a control and monitoring system (2), wherein each of the possible states (9) of the process system can be detected, the system further comprising means for assigning each of said states to one or more multimedia objects (3), e.g. static images on a screen, video sequences or sound signals, and for indicating in a list (6) which states are assigned to which multimedia objects, and a representation unit (8) on which said states can be indicated by means of said multimedia objects (3) **characterized** in that the list (6) is stored separate from the control and monitoring system (2).

8. A system according to claim 7, **characterized** in that it further comprises an object control system (7) which has means for representing, during operation of the process system, the multimedia object or objects, which are assigned to a detected state of the process system, from the list (6) on the representation unit (8).

9. A system according to claim 8, **characterized** in that several multimedia objects, which may be divided into a plurality of groups, may be assigned to at least some of the possible states of the system, and that said representing means (7) are adapted to indicate occurrence of one of these states by representing the object or objects from one of said groups.

10. A system according to claim 9, **characterized** in that the representing means (7) are adapted to subsequently represent the objects from the other group or groups, as desired.

11. A system according to claims 7-10, **characterized** in that it is moreover adapted to generate the audio-visual objects in advance by means of special tools (4) adapted for the purpose.

12. A system according to claims 7-11, **characterized** in that said list (6) comprises a plurality of commands in a special animation language generated by a script compiler.

13. A system according to claims 8-12, **characterized** in that said representing means (7) are moreover adapted to manipulate the multimedia objects depending on their nature.

14. A system according to claims 8-13, **characterized** in that the object control system (7) moreover comprises means for activating signals which may affect the process system (1) and/or the control and monitoring system (2).

## Patentansprüche

1. Verfahren zum Erfassen und Anzeigen der Zustände eines Prozesssystems (1), bei dem jeder der möglichen Zustände (9) des Prozesssystems durch ein Steuerungs- und Überwachungssystem (2) erfasst und einem oder mehreren Multimediaobjekten (3), z.B. statischen Bildern auf einem Bildschirm, Videosequenzen oder Tonsignalen, zugeordnet wird und Information darüber, welche Zustände welchen Multimediaobjekten zugeordnet sind, in einer Liste (6) gespeichert ist und bei dem die Zustände dann mittels der Multimediaobjekte (3) auf einer Darstellungseinheit (8) angezeigt werden, dadurch gekennzeichnet, dass die Liste (6), in der die Information darüber, welche Zustände welchen Multimediaobjekten zugeordnet sind, getrennt vom Steuerungs- und Überwachungssystem (2) gespeichert ist.

2. Verfahren nach Anspruch 1, dadurch gekennzeichnet, dass, wenn das Steuerungs- und Überwachungssystem (2) beim Betrieb des Prozesssystems einen der Zustände erfasst, Information hierüber zu einem Objektsteuerungssystem (7) übertragen wird, das aus der Liste (6) die Anzeige des/der dem Zustand zugeordneten Multimediaobjekts oder -objekte abruft, die dann auf der Darstellungseinheit (8) dargestellt werden.

3. Verfahren nach Anspruch 1 oder 2, dadurch gekennzeichnet, dass mindestens einigen der möglichen Zustände des Systems mehrere Multimediaobjekte zugeordnet werden, wobei die Multimediaobjekte in eine Mehrzahl von Gruppen unterteilt sind, und dass ein Auftreten von einem dieser Zustände durch Darstellen des Objekts oder der Objekte aus einer der Gruppen angezeigt wird.

4. Verfahren nach Anspruch 3, dadurch gekennzeichnet, dass nach Wunsch dann die Objekte aus der anderen Gruppe oder der anderen Gruppen dargestellt werden können.

5. Verfahren nach den Ansprüchen 1-4, dadurch gekennzeichnet, dass die Multimediaobjekte (3) im voraus mittels spezieller für diesen Zweck angepasster Werkzeuge (4) erzeugt werden.

6. Verfahren nach den Ansprüchen 1-5, dadurch gekennzeichnet, dass die Liste (6) durch einen Scriptcompiler (11) als Mehrzahl von Befehlen in einer speziellen Animationssprache erzeugt wird.

7. System zum Erfassen und Anzeigen der Zustände eines Prozesssystems (1) und umfassend ein Steuerungs- und Überwachungssystem (2), bei dem jeder der möglichen Zustände (9) des Prozesssystems erfasst werden kann, wobei das System weiter umfasst: Einrichtungen zum Zuordnen von jedem der Zustände zu einem oder mehreren Multimediaobjekten (3), z.B. statischen Bildern auf einem Bildschirm, Videosequenzen oder Tonsignalen, und zum Anzeigen in einer Liste (6), welche Zustände welchen Multimediaobjekten zugeordnet sind, sowie eine Darstellungseinheit (8), auf der die Zustände mittels der Multimediaobjekte (3) angezeigt werden können, dadurch gekennzeichnet, dass die Liste (6) getrennt vom Steuerungs- und Überwachungssystem (2) gespeichert ist.

8. System nach Anspruch 7, dadurch gekennzeichnet, dass es weiter ein Objektsteuerungssystem (7) umfasst, das Einrichtungen aufweist, um während eines Betriebs des Prozesssystems das Multimediaobjekt oder die Multimediaobjekte, die einem erfassten Zustand des Prozesssystems zugeordnet sind, aus der Liste (6) auf der Darstellungseinheit (8) darzustellen.

9. System nach Anspruch 8, dadurch gekennzeichnet, dass mehrere Multimediaobjekte, die in eine Mehrzahl von Gruppen unterteilt werden können, mindestens einigen der möglichen Zustände des Systems zugeordnet werden können und dass die Darstellungseinrichtungen (7) angepasst sind, um ein Auftreten von einem dieser Zustände anzuzeigen, indem das Objekt oder die Objekte aus einer der Gruppen dargestellt wird.

10. System nach Anspruch 9, dadurch gekennzeichnet, dass die Darstellungseinrichtungen (7) angepasst sind, um nach Wunsch nacheinander die Objekte aus der anderen Gruppe oder den anderen Gruppen darzustellen.

11. System nach den Ansprüchen 7-10, dadurch gekennzeichnet, dass es außerdem angepasst ist, um die audiovisuellen Objekte im voraus mittels spezieller für diesen Zweck angepasster Werkzeuge (4) zu erzeugen.

12. System nach den Ansprüchen 7-11, dadurch gekennzeichnet, dass die Liste (6) eine Mehrzahl von Befehlen in einer speziellen Animationssprache umfasst, die durch einen Scriptcompiler erzeugt wird.

13. System nach den Ansprüchen 8-12, dadurch gekennzeichnet, dass die Darstellungseinrichtungen (7) außerdem angepasst sind, um die Multimediaobjekte in Abhängigkeit von ihrer Natur zu manipulieren.

14. System nach den Ansprüchen 8-13, dadurch gekennzeichnet, dass das Objektsteuerungssystem (7) außerdem Einrichtungen zum Aktivieren von Signalen umfasst, die das Prozesssystem (1) und/oder das Steuerungs- und Überwachungssystem (2) beeinflussen können.

## Revendications

1. Procédé de détection et d'indication des états d'un système fonctionnel (1), dans lequel chacun des états possibles (9) du système fonctionnel est détecté par un système de commande et de surveillance (2) et affecté à un ou plusieurs objets multimédia (3), par exemple des images statiques sur un écran, des séquences vidéo ou des signaux sonores et les informations concernant quels états sont affectés à quels objets multimédia sont mémorisées dans une liste (6) et dans lequel lesdits états sont ensuite indiqués sur un module de représentation (8) au moyen desdits objets multimédia (3), caractérisé en ce que la liste (6) dans laquelle les informations concernant quels états sont affectés à quels objets multimédia sont mémorisées séparément du système de commande et de surveillance (2).

2. Procédé selon la revendication 1, caractérisé en ce que, lorsque le système de commande et de surveillance (2) pendant le fonctionnement du système fonctionnel détecte l'un desdits état, ses informations sont transmises à un système de commande d'objets (7), qui va chercher dans la liste (6) l'indication de l'objet ou des objets multimédia affectés à l'état, qui sont ensuite représentés sur le module de représentation (8).

3. Procédé selon la revendication 1 ou 2, caractérisé en ce que plusieurs objets multimédia sont affectés à au moins certains des états possibles du système, lesdits objets multimédia étant divisés en une pluralité de groupes et en ce que l'apparition de l'un de ces états est indiquée en représentant l'objet ou les objets de l'un desdits groupes.

4. Procédé selon la revendication 3, caractérisé en ce que les objets de l'autre groupe ou des autres groupes peuvent ensuite être représentés, comme désiré.

5. Procédé selon les revendications 1 à 4, caractérisé en ce que les objets multimédia (3) sont produits à l'avance au moyen d'outils spéciaux (4) adaptés dans ce but.

6. Procédé selon les revendications 1 à 5, caractérisé en ce que ladite liste (6) est produite par un compilateur de scénario (11) sous la forme d'une pluralité de commandes dans un langage d'animation spécial.

7. Système de détection et d'indication des états d'un système fonctionnel (1), et comprenant un système de commande et de surveillance (2), dans lequel chacun des états possibles (9) du système fonctionnel peut être détecté, le système comprenant en outre des moyens pour affecter chacun desdits états à un ou plusieurs objets multimédia (3), par exemple des images statiques sur un écran, des séquences vidéo ou des signaux sonores et pour indiquée dans une liste (6) quels états sont affectés à quels objets multimédia et un module de représentation (8) sur lequel lesdits états peuvent être indiqués au moyen desdits objets multimédia (3), caractérisé en ce que la liste (6) est mémorisée séparément du système de commande et de surveillance (2).

8. Système selon la revendication 7, caractérisé en ce qu'il comprend en outre un système de commande d'objets (7) comportant des moyens pour représenter, pendant le fonctionnement du système fonctionnel, l'objet ou les objets multimédia affectés à un état détecté du système fonctionnel, à partir de la liste (6) sur le module de représentation (8).

9. Système selon la revendication 8, caractérisé en ce que plusieurs objets multimédia, qui peuvent être divisés en une pluralité de groupes, peuvent être affectés à au moins certains des états possibles du système, et en ce que lesdits moyens de représentation (7) sont adaptés pour indiquer l'apparition de l'un de ces états en représentant l'objet ou les objets de l'un desdits groupes.

10. Système selon la revendication 9, caractérisé en ce que les moyens de représentation (7) sont adaptés pour représenter à la suite les objets de l'autre groupe ou des autres groupes, comme désiré.

11. Système selon les revendications 7 à 10, caractérisé en ce qu'il est de plus adapté pour produire les objets audiovisuels à l'avance au moyen d'outils spéciaux (4) adaptés dans ce but.

12. Système selon les revendications 7 à 11, caractérisé en ce que ladite liste (6) comprend une pluralité de commandes dans un langage d'animation spécial produit par un compilateur de scénario.

13. Système selon les revendications 8 à 12, caractérisé en ce que lesdits moyens de représentation (7) sont de plus adaptés pour manipuler les objets multimédia en fonction de leur nature.

14. Système selon les revendications 8 à 13, caractérisé en ce que le système de commande d'objets (7) comprend de plus des moyens pour activer des signaux qui peuvent modifier le système fonctionnel (1) et/ou le système de commande et de surveillance (2).
